Europäisches Patentamt

European Patent Office

Office européen des brevets

(11) Veröffentlichungsnummer : **0 127 738 B1**

# EUROPÄISCHE PATENTSCHRIFT

(45) Veröffentlichungstag der Patentschrift :
09.09.87

(51) Int. Cl.⁴ : **G 02 B 23/08**

(21) Anmeldenummer : 84103090.1

(22) Anmeldetag : 21.03.84

(54) Visier in Periskopbauart.

(30) Priorität : 17.05.83 CH 2671/83

(43) Veröffentlichungstag der Anmeldung :
12.12.84 Patentblatt 84/50

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
DE-A- 2 926 973
US-A- 4 108 551
US-A- 4 295 108

(73) Patentinhaber : CONTRAVES AG
Schaffhauserstrasse 580
CH-8052 Zürich (CH)

(72) Erfinder : Arndt, Klaus
Münzelweg 327d
CH-5506 Mägenwil (CH)
Erfinder : Sanvido, Saverio
Fabrikstrasse 3
CH-8152 Glattbrugg (CH)

Jouve, 18, rue St-Denis, 75001 Paris, France

## Beschreibung

Die Erfindung bezieht sich auf ein Visier in Periskopbauart mit einem Hauptspiegel, der in einem Spiegelkopf um eine erste Achse schwenkbar und um eine zweite Achse zusammen mit dem Spiegelkopf drehbar gelagert ist, mit einem aus mehreren Elementen gebildeten optischen System in einem Gehäuse.

Der Erfindung liegt die Aufgabe zugrunde, bei einem Visier der genannten Art die einzelnen optischen Elemente zur Erreichung eines möglichst grossen Beobachtungsraumes in einem Gehäuse anzuordnen.

Gemäss der Erfindung wird diese Aufgabe dadurch gelöst, dass das ein erstes Umlenkprisma, ein Objektiv, einen ersten Strahlenteiler, einen zweiten Strahlenteiler und ein zweites Umlenkprisma umfassende optische System sowie der dem ersten Umlenkprisma zugeordnete Hauptspiegel und der Spiegelkopf in Richtung einfallender sichtbarer und/oder unsichtbarer Strahlungen in bezug auf eine senkrechte Gehäuserückwand von unten nach oben rückwärts geneigt in dem Gehäuse angeordnet sind.

Nach einem weiteren Merkmal der Erfindung ist das Visier zur Vermessung des Zieles mit einem an sich bekannten Laser-Entfernungsmesser versehen. Hierbei ist der eigentliche Laser-Sender an der Rückseite des Visier-Gehäuses angeordnet, dem Hauptspiegel ein weiterer Umlenkspiegel sowie dem ersten Strahlenteiler des optischen Systems der eigentliche Laser-Empfänger zugeordnet.

Weitere Merkmale der Erfindung ergeben sich aus der folgenden Beschreibung in Verbindung mit der Zeichnung und den Patentansprüchen.

Die Erfindung wird nachstehend anhand eines Ausführungsbeispiels unter Bezugnahme auf die Zeichnung näher beschrieben. Es zeigt :

Figur 1 eine schematisch und im Schnitt dargestellte Seitenansicht eines Visiers mit der Anordnung der optischen Elemente und eines Laser-Entfernungsmessers,

Figur 2 das in Schnittansicht dargestellte Visier gemäss Fig. 1,

Figur 3 eine schematisch und in grösserem Massstab dargestellte Ansicht der als Baueinheit auf einem Trägerkörper angeordneten optischen Elemente,

Figur 4 einen Schnitt entlang der Linie IV-IV in Fig. 3 mit an dem Trägerkörper angeordneter Justiervorrichtung,

Figur 5 einen Schnitt entlang der Linie V-V in Fig. 3 durch den Trägerkörper,

Figur 6 einen in Ansicht dargestellten Spiegelkopf für den Hauptspiegel des Visiers gemäss Fig. 1,

Figur 7 den in Seitenansicht dargestellten Spiegelkopf gemäss Fig. 6, und

Figur 8 ein Schaubild zur Erläuterung der Koordinaten, wie sie durch die Dreh- und Schwenkbewegung des in dem Visier-Gehäuse gelagerten Hauptspiegels erreicht werden.

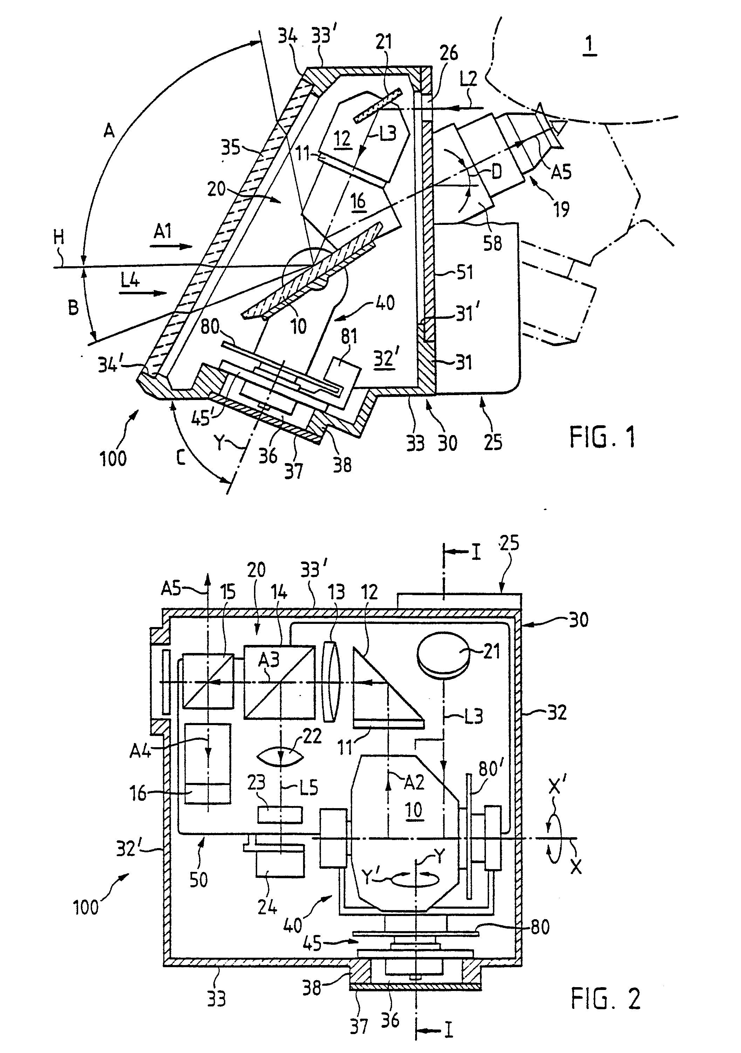

In den Figuren 1 und 2 ist mit 100 ein in Periskopbauart dargestelltes Visier bezeichnet, welches im wesentlichen ein Gehäuse 30, ein aus mehreren Elementen gebildetes optisches System 20 sowie einen aus mehreren Elementen gebildeten, integrierten Laser-Entfernungsmesser 25 umfasst.

Fig. 1 zeigt das schematisch dargestellte Visier 100 im Schnitt gemäss der in Fig. 2 dargestellten Linie I-I und man erkennt das Gehäuse 30, das optische System 20 sowie den teilweise dargestellten Laser-Entfernungsmesser 25. Das im wesentlichen aus Seitenwänden 32, 32', einer Rückwand 31 sowie einem oberen Boden 33' und einem unteren Boden 33 gebildete Gehäuse 30 hat auf der der Rückwand 31 gegenüberliegenden Seite eine von unten nach oben rückwärts geneigte Vorderwand 34. In der Vorderwand 34 ist eine als Fenster ausgebildete Ausnehmung 34' vorgesehen, welche mittels einer mit nicht dargestellten Mitteln befestigten Glas-Abdeckplatte 35 verschlossen ist.

Das aus den einzelnen Elementen gebildete optische System 20 umfasst, wie in Fig. 1 und Fig. 2 dargestellt und in Richtung optischer Strahlung A1, A2, A3, A4 und A5 gesehen, einen in einem Spiegelkopf 40 schwenkbar gelagerten Hauptspiegel 10, ein erstes mit einer Aperturblende 11 versehenes Umlenkprisma 12, ein Objektiv 13, einen ersten Strahlenteiler 14 zur Ausspiegelung der Laserstrahlung, einen zweiten Strahlenteiler 15 und ein zweites Umlenkprisma 16 zur Umlenkung der optischen Strahlung sowie ein Okular 19 für den Einblick eines Beobachters 1.

Das Visier 100 ist auf einem nicht dargestellten Träger, zum Beispiel auf einer Waffe angeordnet und zusammen mit der Waffe nach Höhe und Seite auf ein Objekt ausrichtbar. Der in dem Visier 100 angeordnete Spiegelkopf 40 einerseits und der Hauptspiegel 10 andererseits kann relativ zu der Bewegung der Waffe gedreht beziehungsweise geschwenkt werden. Hierbei ist der Hauptspiegel 10, wie in Fig. 2 dargestellt, um eine erste Achse X in Pfeilrichtung X' schwenkbar und zusammen mit dem Spiegelkopf 40 um eine zweite Achse Y in Pfeilrichtung Y' drehbar. Der Drehbereich in Pfeilrichtung Y' des Spiegelkopfes 40 beträgt nach links und rechts jeweils etwa 27°. Zur Erreichung einer möglichst grossen, aus den Winkeln A und B gebildeten Schwenkbewegung des Hauptspiegels 10 ist der Spiegelkopf 40 in bezug auf den unteren Boden 33, wie in Fig. 1 dargestellt, unter einem Winkel C in Richtung der Rückwand 31 gesehen, geneigt in dem Gehäuse 30 angeordnet und gelagert.

Eine bevorzugte geometrische Anordnung mit optimalem, auf eine Horizontalebene H bezogenen Elevationswinkel A von etwa +80° und mit optimalem Depressionswinkel B von etwa — 20° wird bei einem Neigungswinkel C des Spiegelkopfes 40 von etwa 66° erreicht.

Wie in Fig. 1 dargestellt, ist ferner zur Erreichung eines möglichst grossen Beobachtungsraumes über dem Visier-Gehäuse 30 das Okular 19 unter einem Winkel D schräg geneigt an der Rückseite des Gehäuses 30 angeordnet. Der mit D bezeichnete Einblickwinkel liegt etwa bei 25°. Mit dieser Anordnung kann der Beobachter 1 durch eine geringe Nickbewegung mit dem Kopf sowohl in das Okular 19 blicken als auch den freien Beobachtungsraum oberhalb des Visiers für eine eventuell erforderliche Selbsteinweisung überwachen.

Die in Fig. 1 und Fig. 2 dargestellten Elemente 12, 13, 14, 15 und 16 des optischen Systems 20 sowie ein dem Hauptspiegel 10 zugeordneter Umlenkspiegel 21 sind entsprechend der Schräglage des Spiegelkopfes 40 in dem Gehäuse 30 angeordnet. Das optische System 20 ist im wesentlichen auf einem als Teilstück 51 der Rückwand 31 ausgebildeten Trägerkörper 50 angeordnet, welcher nachstehend im Einzelnen beschrieben wird.

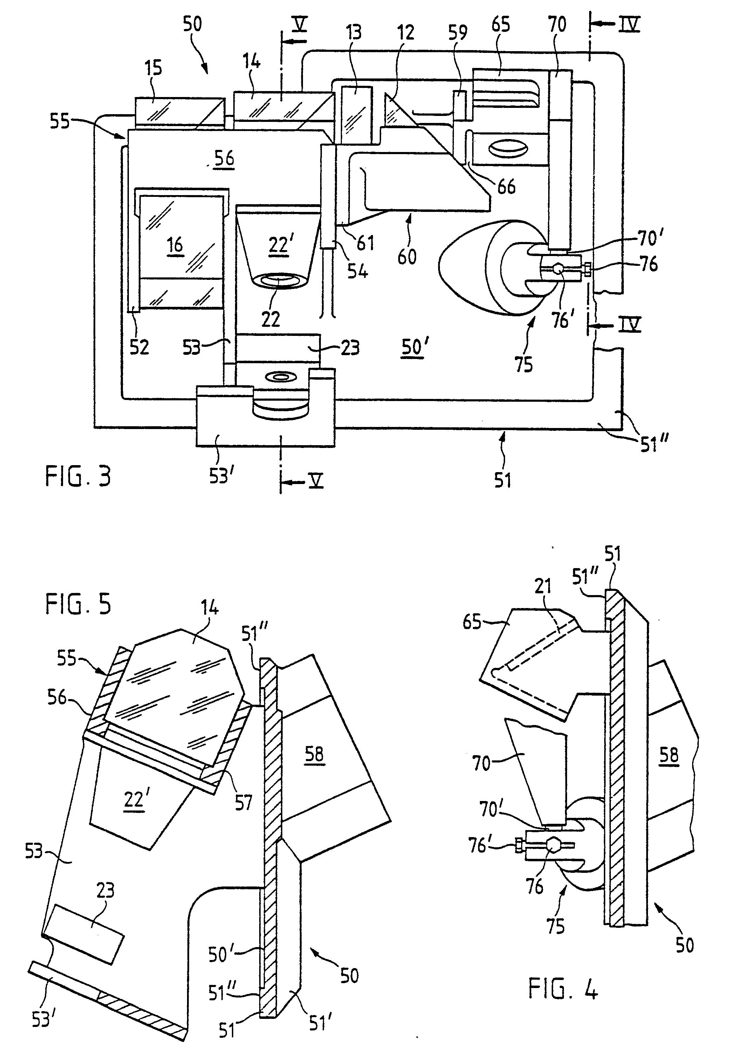

Fig. 3 zeigt den schematisch und in grösserem Massstab dargestellten Trägerkörper 50, welcher das mit einer umlaufenden Anlagefläche 51″ versehene, plattenförmig ausgebildete Teilstück 51 aufweist und an seiner Innenseite 50′ zur Aufnahme und Befestigung der optischen Elemente ausgebildet ist. Der Trägerkörper 50 hat an der Innenseite 50′ eine im wesentlichen aus Stegen 52, 53, 54 und einer Stirnwand 56 sowie einer Rückwand 57 (Fig. 5) gebildete Tasche 55, welche zur Aufnahme des zweiten Umlenkprismas 16, des zweiten Strahlenteilers 15, des ersten Strahlenteilers 14 sowie einer ersten Linse 22 ausgebildet ist. Die Teile 16, 15, 14 und 22 sind mit nicht dargestellten Mitteln in der Tasche 55 gehalten. An dem Steg 53 sowie an einem Flansch 53′ ist mit nicht näher dargestellten Mitteln ein Linsensystem 23 sowie ein Laser-Empfänger 24 (Fig. 2) des Laser-Entfernungsmessers 25 befestigt.

An dem mittleren Steg 54 ist mit einem Flansch 61 ein in nicht näher dargestellter Weise taschenartig ausgebildeter und mit nicht dargestellten Mitteln befestigter Träger 60 angeordnet, welcher zur Aufnahme des ersten Umlenkprismas 12 sowie des in bestimmter Stellung im Träger 60 fixierbaren Objektivs 13 ausgebildet ist.

An einem weiteren Steg 59 des Trägerkörpers 50 einerseits und an einem Justierhebel 70 andererseits ist mit nicht dargestellten Mitteln ein Haltekörper 65 für den Umlenkspiegel 21 (Fig. 1, 2) befestigt. Der mit dem einen Ende an dem Haltekörper 65 angeordnete und befestigte Justierhebel 70 steht mit dem anderen Ende mit einem entsprechend zugeordneten und am Trägerkörper 50 angeordneten Lager 75 in Wirkverbindung. Zwei an dem Lager 75 angeordnete Justierschrauben 76, 76′ wirken auf einen Zapfen 70′ des Justierhebels 70. Der mit einem entsprechenden Dehnungsschlitz 66 versehene und den Umlenkspiegel 21 tragende Haltekörper 65 ist über den Justierhebel 70 durch entsprechende Drehung der Justierschrauben 76, 76′ verstellbar.

Mit der beschriebenen Verstellbarkeit der Teile 65, 70 wird eine exakte, koaxial zu der einfallenden sichtbaren Strahlung orientierte Umlenkung des von dem Laser-Entfernungsmesser 25 ausgesandten Laserstrahls L2, L3 auf die Reflexionsfläche des Hauptspiegels 10 erreicht.

Wie in Fig. 1 und 2 dargestellt, durchdringt der Laserstrahl L2 eine entsprechend im Teilstück 51 angeordnete Oeffnung 26, wird von dem Umlenkspiegel 21 als Strahl L3 auf den Hauptspiegel 10 und von dort auf das Objekt gelenkt und von diesem entsprechend reflektiert. Hierbei verläuft der von dem Objekt auf den Hauptspiegel 10 reflektierte unsichtbare Laserstrahl L4 im wesentlichen parallel zu der einfallenden sichtbaren Strahlung A1.

Fig. 4 zeigt einen Schnitt gemäss der Linie IV-IV in Fig. 3 und man erkennt das Teilstück 51 des Trägerkörpers 50, ein angeformtes, teilweise dargestelltes Trägerorgan 58 für das Okular 19, das mit den Justierschrauben 76, 76′ versehene Lager 75, ein Teilstück des Justierhebels 70 mit dem Zapfen 70′ sowie den Haltekörper 65 für den Umlenkspiegel 21.

Fig. 5 zeigt einen Schnitt gemäss der Linie V-V in Fig. 3 und man erkennt den in der Tasche 55 angeordneten ersten Strahlenteiler 14, die in einem Haltekörper 22′ angeordnete Linse 22, den Linsenkörper 23 sowie den an der Innenseite 50′ des Trägerkörpers 50 angeformten Steg 53 mit dem Flansch 53′ für die Befestigung des Laser-Empfängers 24. Die in Fig. 5 schematisch dargestellten Teile 14, 22 und 23 sind aus Gründen der einfacheren Darstellung nicht geschnitten dargestellt.

Weiterhin erkennt man die an der Innenseite 50′ angeordnete Anlagefläche 51″ sowie die in bezug auf das Teilstück 51 schräg nach hinten geneigt angeformten Wände 56 und 57 der Tasche 55. An der anderen Seite des Teilstücks 51 sind mehrere, in parallelem Abstand zueinander angeordnete Rippen 51′ sowie das Trägerorgan 58 angeordnet.

Der voran anhand der Figuren 3, 4 und 5 beschriebene und die Teile 55, 58, 60, 65 und 70 sowie die optischen Elemente 12, 13, 14, 15, 16, 22 und 23 umfassende Trägerkörper 50 ist als eine Baueinheit ausgebildet und, wie in Fig. 1 näher dargestellt, im wesentlichen durch eine Ausnehmung 31′ in das Gehäuse 30 eingesetzt und mit nicht dargestellten Mitteln befestigt. Das Teilstück 51 des Trägerkörpers 50 bildet hierbei ein Teil der Rückwand 31.

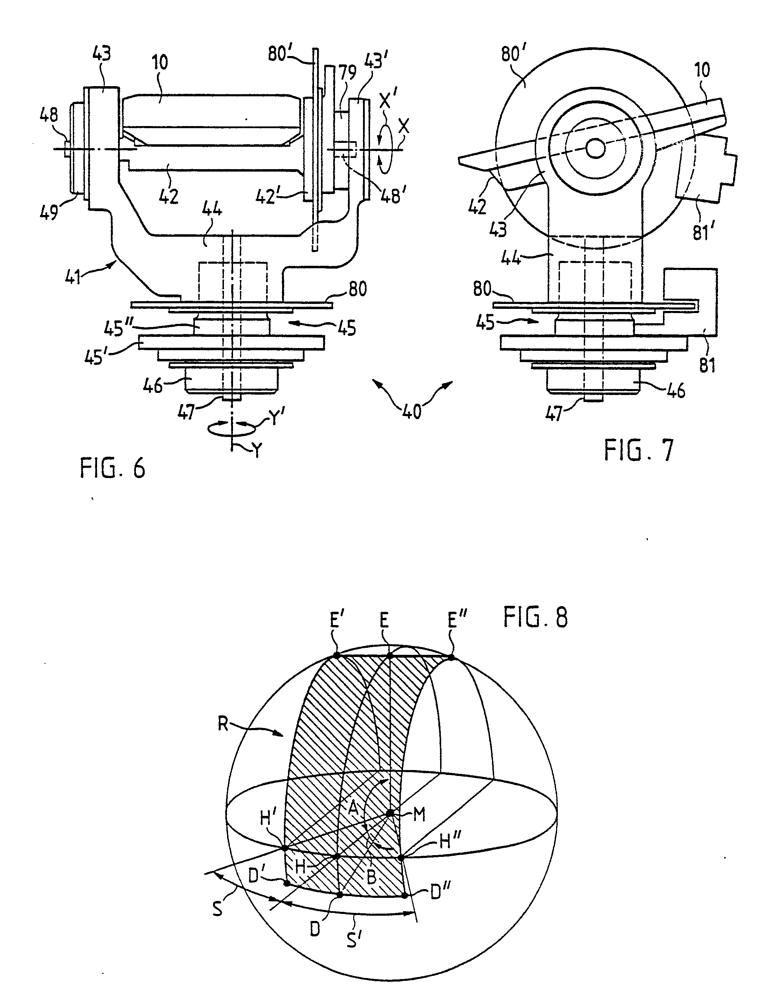

In Fig. 6 und 7 ist der den in unterschiedlichen Stellungen dargestellten Hauptspiegel 10 tragende und in seiner Gesamtheit mit 40 bezeichnete Spiegelkopf dargestellt, welcher nachstehend im Einzelnen beschrieben wird: Der Spiegelkopf 40 umfasst im wesentlichen einen Trägerkörper 41, eine Trägerplatte 42 für den Hauptspiegel 10, einen Stützkörper 45 sowie eine erste Kodierscheibe 80 und eine zweite Kodierscheibe 80′. Den beiden Kodierscheiben 80, 80′ ist zur Erfassung der jeweiligen Winkelstellung des Hauptspiegels 10 oder des Spiegelkopfes 40 je eine, in Fig. 7 schematisch dargestellte Kodiereinrichtung 81, 81' zugeordnet. Der Trägerkörper 41 hat, wie aus Fig. 6 ersichtlich, einen im wesentlichen U-förmig ausgebildeten Profilquerschnitt mit zwei an einem Basisteil 44 angeformten Seitenteilen 43, 43'. Der Stützkörper 45 ist als Hohlwelle ausgebildet und hat ein Flanschteil 45' sowie einen Wellenkörper 45", welcher zur Lagerung des mit einer nicht näher dargestellten, zylindrischen Ausnehmung versehenen Basisteils 44 ausgebildet ist. An der unteren Seite des Stützkörpers 45 ist mit nicht dargestellten Mitteln ein gehäuseartig ausgebildeter Buchsenkörper 46 befestigt, welcher zur Aufnahme eines nicht dargestellten ersten Antriebsaggregates ausgebildet ist. Der Buchsenkörper 46, der Stützkörper 45 sowie das Basisteil 44 des Trägerkörpers 41 werden von einer unsichtbar, gestrichelt dargestellten Antriebswelle 47 durchdrungen, welche auf der einen Seite mit dem Trägerkörper 41 und auf der anderen Seite mit dem nicht dargestellten ersten Antriebsaggregat wirkverbunden ist.

Die zwischen den beiden Seitenteilen 43, 43' des Trägerkörpers 41 angeordnete Trägerplatte 42 ist auf beiden Seiten mit angeformten Wellenzapfen 48, 48' in den Seitenteilen 43, 43' gelagert. Auf der einen Seite ist der Wellenzapfen 48 in nicht näher dargestellter Weise mit einem zweiten Antriebsaggregat wirkverbunden, wobei das zweite, nicht dargestellte Antriebsaggregat in einem an dem Seitenteil 43 befestigten, gehäuseartig ausgebildeten Buchsenkörper 49 angeordnet ist. Auf der anderen Seite ist die Trägerplatte 42 mit einem angeformten Flansch 42' versehen, an welchem die zweite Kodierscheibe 80' mit nicht dargestellten Mitteln befestigt ist. Ferner ist in dem Seitenteil 43' ein Buchsenkörper 79 angeordnet, in welchem der unsichtbar dargestellte Wellenzapfen 48' gelagert ist.

Der anhand von Fig. 6 und 7 voran beschriebene Spiegelkopf 40 ist, wie in Fig. 1 und 2 dargestellt, im Bereich eines verstärkten und mit einer Ausnehmung 36 versehenen Bodenteils 38 angeordnet und mit dem Flanschteil 45' an der Innenseite des Bodenteils mit nicht dargestellten Mitteln befestigt. Die Ausnehmung 36 wird nach der Montage des Spiegelkopfs 40 mit einer Platte 37 verschlossen.

Bei den beiden, in den Buschsenkörpern 46, 49 angeordneten, nicht näher dargestellten und bezeichneten Antriebsaggregaten handelt es sich um sogenannte Drehmomenterzeuger (Torquer), mittels welchen einerseits der Spiegelkopf 40 zusammen mit dem Hauptspiegel 10 um die zweite Achse Y in Pfeilrichtung Y' gedreht und andererseits der in dem Trägerkörper 41 gelagerte Hauptspiegel 10 um die erste Achse X in Pfeilrichtung X' geschwenkt werden kann. Die Schwenkbewegung des Hauptspiegels 10 in Pfeilrichtung X' entspricht einer Elevationsverstellung und die Drehbewegung des Spiegelkopfes 40 mit dem Hauptspiegel 10 in Pfeilrichtung Y' im wesentlichen einer Azimutverstellung.

Fig. 8 zeigt als Schaubild den von der Sehfeldmitte M erreichten und schraffiert dargestellten Beobachtungsraum R, welcher einerseits durch die Drehbewegung um die zweite Achse Y und andererseits durch die Schwenkbewegung um die erste Achse X erreicht wird.

Zum Verfolgen eines sich bewegenden Zieles oder zum Suchen eines Zieles kann der Spiegelkopf 40 mit dem Hauptspiegel 10, wie in Fig. 8 schematisch dargestellt, durch die Bewegung in Horizontalebene H bis in eine erste Stellung H' sowie in eine zweite Stellung H" seitlich gedreht und teilweise unter Nachsteuerung des entsprechenden Seitenwinkels durch die Elevations- oder Depressions-Verstellung bis in die Positionen E, E' oder E" beziehungsweise D, D' oder D" geschwenkt werden. Hierbei ist die Elevations- oder Depressions-Verstellung mit der seitlichen Drehverstellung entsprechend zu koordinieren.

Versuche haben gezeigt, dass ausgehend von der Horizontalebene H bei einem Elevationswinkel A von etwa +80° und einem Depressionswinkel B von etwa — 20° sowie einem Seitenwinkel S beziehungsweise S' von jeweils etwa 15° der in Fig. 8 schematisch dargestellte, im wesentlichen rechteckige Beobachtungsraum R unter Beibehaltung ergonomisch optimaler Einblickverhältnisse analysiert werden kann.

Der für das Visier 100 vorgesehene, eingangs erwähnte Laser-Entfernungsmesser 25 hat ein nicht näher dargestelltes und nicht bezeichnetes Laser-Senderteil sowie ein räumlich getrennt von dem Senderteil angeordnetes Laser-Empfängerteil. Das die Teile 22, 23 und 24 umfassende Laser-Empfängerteil ist im wesentlichen in dem auf den Trägerkörper 50 angeordneten optischen System 20 integriert und in dem Visier-Gehäuse 30 angeordnet.

## Patentansprüche

1. Visier (100) in Periskopbauart mit einem Hauptspiegel (10), der in einem Spiegelkopf (40) um eine erste Achse (X) schwenkbar und um eine zweite Achse (Y) zusammen mit dem Spiegelkopf drehbar gelagert ist, mit einem aus mehreren Elementen gebildeten optischen System (20) in einem Gehäuse (30), dadurch gekennzeichnet, dass das ein erstes Umlenkprisma (12), ein Objektiv (13), einen ersten Strahlenteiler (14), einen zweiten Strahlenteiler (15) und ein zweites Umlenkprisma (16) umfassende optische System (20) sowie der dem ersten Umlenkprisma (12) zugeordnete Hauptspiegel (10) und der Spiegelkopf (40) in Richtung einfallender sichtbarer und/oder unsichtbarer Strahlungen (A1 und L4) in bezug auf eine senkrechte Gehäuserückwand (31) von unten nach oben rückwärts geneigt in dem Gehäuse (30) angeordnet sind.

2. Visier nach Anspruch 1, dadurch gekennzeichnet, dass das aus den einzelnen Elementen (12, 13, 14, 15, 16) gebildete optische System (20) an einem Trägerkörper (50) angeordnet und als eine Baueinheit ausgebildet in das Gehäuse (30) einsetzbar ist.

3. Visier nach Anspruch 1, dadurch gekennzeichnet, dass an der Rückseite des Gehäuses (30) ein zur Aufnahme eines Okulars (19) ausgebildeter Haltekörper (58) in bezug auf die senkrechte Gehäuserückwand (31) schräg geneigt unter einem Winkel (D) von etwa 25° angeordnet ist.

4. Visier nach Anspruch 2 und 3, dadurch gekennzeichnet, dass der Haltekörper (58) für das Okular (19) an dem Trägerkörper (50) angeordnet ist und mit diesem eine Baueinheit bildet.

5. Visier nach Anspruch 1, dadurch gekennzeichnet, dass der den Hauptspiegel (10), eine erste und eine zweite Kodierscheibe (80, 80') sowie integrierte Antriebsaggregate für die Dreh- und Schwenkbewegung umfassende Spiegelkopf (40) als eine Baueinheit ausgebildet und schräg geneigt in dem Gehäuse (30) angeordnet auf dem Boden (33) befestigt ist.

6. Visier nach Anspruch 1 oder 5, dadurch gekennzeichnet, dass der Spiegelkopf (40) im wesentlichen U-förmig ausgebildet ist und in den beiden senkrechten Seitenteilen (43, 43') eine um die erste Achse (X) schwenkbar gelagerte Trägerplatte (42) für den Hauptspiegel (10) aufweist.

7. Visier nach Anspruch 2, dadurch gekennzeichnet, dass an der Rückseite des Gehäuses (30) als getrennte Baueinheit ein an sich bekannter Laser-Entfernungsmesser (25) befestigt ist, von welchem das Empfängerteil in dem optischen System (20) integriert und zusammen mit dem Trägerkörper (50) in dem Gehäuse (30) angeordnet ist.

8. Visier nach Anspruch 7, dadurch gekennzeichnet, dass eine erste Linse (22), ein Linsensystem (23) und ein Laser-Empfänger (24) des Laser-Empfängerteils sowie ein dem Hauptspiegel (10) zugeordneter Umlenkspiegel (21) für auf das Objekt emittierte Laserstrahlung auf dem Trägerkörper (50) angeordnet und gehalten sind.

## Claims

1. Periscope-like sighting device (100) having a main mirror (10) which is mounted in a mirror head (40) pivotably round a first axis (X) and which, together with the mirror head, is mounted rotatably round a second axis (Y), and having an optical system (20), formed from several elements, in a housing (30), characterised in that the optical system (20) comprising a first deflection prism (12), an objective lens (13), a first beam splitter (14), a second beam splitter (15) and a second deflection prism (16), and also the main mirror (10) associated with the first deflection prism (12), and the mirror head (40), are arranged in the housing (30) to slope backwards from bottom to top in relation to a vertical rear wall (31) of the housing in the direction of incident visible and/or invisible radiations (A1 and L4).

2. Sighting device according to claim 1, characterised in that the optical system (20) formed from the individual elements (12, 13, 14, 15, 16) is arranged on a carrier body (50) and can be installed in the housing (30) as a structural unit.

3. Sighting device according to claim 1, characterised in that a retaining member (58), constructed for receiving an ocular (19), is arranged on the rear side of the housing (30) and is inclined steeply with respect to the vertical rear wall (31) of the housing at an angle (D) of approximately 25°.

4. Sighting device according to claim 2 and 3, characterised in that the retaining member (58) for the ocular (19) is arranged on the carrier body (50) and forms a structural unit with this.

5. Sighting device according to claim 1, characterised in that the mirror head (40) comprising the main mirror (10), a first and a second code disc (80, 80') and integrated drive mechanisms for the rotating- and pivoting movement, is constructed as a structural unit and is arranged to be steeply inclined in the housing (30) and fixed to the floor (33).

6. Sighting device according to claim 1 or 5, characterised in that the mirror head (40) is substantially U-shaped and in the two vertical side parts (43, 43') has a carrier plate (42), for the main mirror (10), which is pivotably mounted round the first axis (X).

7. Sighting device according to claim 2, characterised in that on the rear side of the housing (30) there is secured, as a separate component, a laser range finder (25) know per se, the receiver portion of which is integrated in the optical system (20) and is arranged together with the carrier body (50) in the housing (30).

8. Sighting device according to claim 7, characterised in that a first lens (22), a lens system (23) and a laser-receiver (24) of the laser-receiver portion, and a deflection mirror (21) associated with the main mirror (10), for the laser radiation emitted onto the object, are arranged and retained on the carrier body (50).

## Revendications

1. Viseur (100) en forme de périscope comportant un miroir principal (10) monté basculant autour d'un premier axe (X) dans une tête de miroir (40) et pivotant autour d'un second axe (Y) en même temps que la tête de miroir, avec un système optique (20) formé de plusieurs éléments logés dans un boîtier (30), viseur caractérisé en ce que le système optique (20) qui se compose d'un premier prisme de renvoi (12), d'un objectif (13), d'un premier diviseur de faisceau (14), d'un second diviseur de faisceau (15) et d'un second prisme de renvoi (16) ainsi que le miroir principal (10) associé au premier prisme de renvoi (12) et la tête de miroir (40) sont logés dans le boîtier (30) dans une position inclinée de bas en haut vers l'arrière dans la direction des rayons incidents visibles et/ou invisibles (A1 et L4) par rapport à la paroi arrière (31) verticale du boîtier.

2. Viseur selon la revendication 1, caractérisé en ce que le système optique (20) formé des différents éléments (12, 13, 14, 15, 16) est monté sur un organe de support (50) et est réalisé sous la forme d'un ensemble susceptible d'être placé dans le boîtier (30).

3. Viseur selon la revendication 1, caractérisé en ce que, sur le côté arrière du boîtier (30), il est prévu un organe de retenue (58) destiné à recevoir un oculaire (19), organe de retenue qui est monté de manière inclinée par rapport à la paroi arrière verticale (31) du boîtier suivant un angle (D) d'environ 25°.

4. Viseur selon les revendications 2 et 3, caractérisé en ce que l'organe de retenue (58) de l'oculaire (19) est prévu sur l'organe de support (50) et forme avec celui-ci un ensemble constructif.

5. Viseur selon la revendication 1, caractérisé en ce que la tête de miroir (40) qui comprend un premier et un second disque codé (80, 80') ainsi qu'une unité d'entraînement, intégrée pour le mouvement de rotation et de basculement est réalisée sous la forme d'un ensemble constructif et est montée de manière inclinée dans le boîtier (30) en étant fixée sur le fond (33).

6. Viseur selon la revendication 1 ou 5, caractérisé en ce que la tête de miroir (40) a une forme principalement en U et les deux parties latérales verticales (43, 43') comportent une plaque de support (42) pour le miroir principal (10), plaque montée basculante autour du premier axe (X).

7. Viseur selon la revendication 2, caractérisé en ce que, sur la face arrière du boîtier (30), est fixé un télémètre laser (25) connu en soi, constituant un composant distinct, dont le récepteur est intégré au système optique (20) et est monté avec l'organe de support (50) dans le boîtier (30).

8. Viseur selon la revendication 7, caractérisé en ce que l'organe de support (50) reçoit et porte une première lentille (22), un système de lentilles (23) et un récepteur laser (24) de la partie de réception laser ainsi qu'un miroir de renvoi (21) associé au miroir principal (10) pour le rayonnement laser émis vers l'objectif.

FIG. 1

FIG. 2

FIG. 3

FIG. 5

FIG. 4

FIG. 6

FIG. 7

FIG. 8